# EUROPÄISCHE PATENTSCHRIFT

(11) **EP 1 786 679 B1**
(45) Veröffentlichungstag und Bekanntmachung des Hinweises auf die Patenterteilung: **08.10.2008**
(21) Anmeldenummer: 05769686.6
(22) Anmeldetag: 29.07.2005
(51) Int. Cl.: B65B 35/52, B65G 47/90

(54) **VORRICHTUNG ZUM HANDHABEN STABFÖRMIGER OBJEKTE**
DEVICE FOR HANDLING ROD-SHAPED OBJECTS
DISPOSITIF PERMETTANT DE MANIPULER DES OBJETS EN FORME DE BARRE

(30) Priorität: 10.09.2004 DE 102004044293
(43) Veröffentlichungstag der Anmeldung: 23.05.2007
(73) Patentinhaber: KUKA InnoTec GmbH, 86165 Augsburg (DE)
(72) Erfinder: KIMMIG, Erwin, 77876 Kappelrodeck (DE); LASCH, Siegfried, 77866 Rheinau-Freistett (DE)
(74) Vertreter: Lempert, Jost
(86) Internationale Anmeldenummer: PCT/EP2005/008236
(87) Internationale Veröffentlichungsnummer: WO 2006/027053

(56) Entgegenhaltungen:
- EP-A- 0 224 678
- DE-A1- 3 741 257
- US-A- 5 273 167
- US-B1- 6 439 828

## Beschreibung

Die Erfindung betrifft eine Vorrichtung zum Handhaben von im Wesentlichen stabförmigen Objekten, insbesondere Stangen aus vereinzelbar ineinander gestapelten Artikeln, wie Kunststoffbechern, mit mehreren ersten Haltestäben mit im Wesentlichen hakenförmigen Endstücken zum Untergreifen der stabförmigen Objekte.

Zur Aufnahme von Lebensmitteln in der Molkereiindustrie, wie Joghurt, Milchgetränken oder dergleichen, werden häufig Becher aus tiefgezogenen Kunststofffolien verwendet. Die vorgenannten Becher sind dabei in der Regel so ausgebildet, dass sie ineinander gestapelt werden können. Die auf diese Weise gebildeten Reihen von ineinander verschachtelten Bechern werden im Folgenden als Becherstangen bezeichnet.

In der Praxis werden die Becher nach ihrer Herstellung in einer entsprechenden Tiefziehmaschine in Form von Becherstangen direkt einer Weiterbearbeitungsmaschine, wie einer Dekoriermaschine zum Bedrucken der Becher, zugeführt und anschließend für einen Transport, beispielsweise zu einer Befüllmaschine, in Ladehilfsmittel, insbesondere Kartons, verpackt. Auch ein Verpacken in die genannten Ladehilfsmittel direkt nach der Herstellung ist in der Praxis möglich.

Bei bekannten Vorrichtungen werden die Ladevorgänge, d.h. das Ein- und Auspacken von Becherstangen in einen bzw. aus einem Karton, in Verbindung mit einem Ladehilfsmittel manuell oder teilautomatisiert durchgeführt. In der Regel werden die Kunststoffbecher, die beispielsweise aus Polypropylen (PP) oder Polystyrol (PS) gefertigt sind, in einem Thermo-Tiefziehverfahren hergestellt. Hierzu wird eine extrudierte Folie der Tiefziehmaschine zugeführt und in dieser erhitzt, anschließend durch Vorstrecker vorgeformt und schließlich - beispielsweise mittels Druckluft - in eine Form gepresst, gekühlt und ausgestanzt. Die fertigen, noch heißen und leicht verformbaren Becher werden in der Tiefziehmaschine gestapelt (Ineinanderstapeln von mehreren Bechern zu einer Becherstange) und anschließend entweder automatisch einer Weiterverarbeitungsmaschine zum Dekorieren (Bedrucken) zugeführt oder manuell in einen Karton verpackt. Aus Hygienegründen weist der Karton innen häufig eine Auskleidung, z.B. in Form eines Kunststoffbeutels, auf.

Gegenwärtig existierende Vorrichtungen weisen eine Vielzahl von Nachteilen auf. So ist bislang keine Vorrichtung bekannt, mit der sämtliche beim genannten Handhaben stabförmiger Objekte durchzuführenden Verfahrensschritte, insbesondere das Ablegen in bzw. das Entnehmen aus einem Ladehilfsmittel, vollautomatisch durchführbar sind. Weiterhin ist bei bekannten Vorrichtungen zum automatischen Einpacken von Becherstangen in Ladehilfsmittel beim Umstellen auf einen neuen Becherdurchmesser oder Bechertyp ein zeit- und kostenaufwändiges Umrüsten verschiedener Maschinenelemente notwendig, wodurch sich insgesamt eine geringere Variantenflexibilität ergibt. Darüber hinaus erzeugen die meisten Tiefziehmaschinen pro Tiefziehtakt nicht nur einen einzelnen Becher, sondern gleichzeitig eine Vielzahl von Einzelbechern nach einem bestimmten Muster. Dieses ist in der Regel zweidimensional und wird als Kavität bezeichnet. Da die Übergabe der Becher von der Tiefziehmaschine an den nächsten Handhabungs- oder Verarbeitungsschritt, beispielsweise Dekorieren oder Verpacken, im allgemeinen in Form von Becherstangen, also eindimensional, erfolgt, muss in einer der Tiefziehmaschinen eine entsprechende Vorrichtung integriert sein, durch die eine Kavität in einzelne Becherstangen umsetzbar ist. Dadurch werden die entsprechenden Tiefziehmaschinen aufwändiger und in der Herstellung und Wartung entsprechend teurer.

Zudem erfolgt die Weitergabe der Becherstangen bei bekannten Tiefziehmaschinen in der Regel seitlich liegend. Durch das seitliche Weiterschieben der Becherstangen wirken Kräfte, wie Gewichtskraft und Reibungskräfte, auf einen Siegelrand der Becher ein, was die Herstellungsqualität des Bechers grundsätzlich negativ beeinflusst. Dies um so mehr, als die Becher nach dem Tiefziehen noch eine Temperatur von 80°C aufweisen und deshalb besonders leicht verformbar sind. Das Abfüllen und Verschließen eines Joghurtbechers stellt extrem hohe Anforderungen an den genannten Siegelrand hinsichtlich Toleranz, Rundheit und Winkellage gegenüber einer Becherachse, so dass dieser Nachteil des Standes der Technik sich in besonders gravierender Weise auswirkt.

Schließlich ist es bei bekannten Vorrichtungen speziell zum Einpacken von Becherstangen in Ladehilfsmittel, wie Kartons oder dergleichen, nicht möglich, ein Packmuster im Karton derart einzustellen, dass eine größtmögliche Packungsdichte, d.h. eine maximal mögliche Anzahl von Becherstangen pro Karton, erreichbar ist.

Aus der DE 40 30 215 C2 ist eine Vorrichtung zum Handhaben, speziell zum Entnehmen, von Becherstangen bekannt, die in einem offenen Transportbehälter liegend angeliefert werden. Dazu ist die Verwendung eines jeweils eine Becherstange an deren Längsseite erfassenden Saugorgans offenbart. Hierbei ist - wie vorstehend ausgeführt - insbesondere als nachteilig anzusehen, dass durch das waagerechte Befüllen der Kartons mit Becherstangen eine optimale Packungsdichte in der Regel nicht erreicht wird. Aufgrund des auftretenden Kraftschlusses zwischen Bechern und Saugorgan sowie aufgrund des Eigengewichtes der Becherstangen, durch das die unteren Lagen im Karton stark belastet werden, ist die bekannte Vorrichtung insbesondere zum Handhaben noch warmer, verformbarer Becher nicht geeignet. Zudem ist das Saugorgan gemäß der DE 40 30 215 C2 nur für Becherstangen fester Länge einsetzbar.

Die DE 35 41 900 A1 offenbart ein Verfahren und eine Vorrichtung zum lagenweisen Versetzen von gleich großen Stangen, wobei ein Greifer mit einem Greifbügel eine Mehrzahl von parallel angeordneten Becherstangen form- bzw. kraftschlüssig umfasst und diese liegend in Kartons ablegt. Somit ergeben sich im Wesentlichen dieselben Nachteile, wie vorstehend hinsichtlich der DE 40 30 215 C2 ausgeführt.

Aus der DE 37 41 257 A1 ist eine Greifvorrichtung, insbesondere für liegende Kunststoffbecher-Steckstapel, bekannt. Auch hier werden die Becherstangen übereinander liegend in Ladehilfsmitteln angeordnet. Zudem weist die offenbarte Greifvorrichtung mindestens ein Zangenteil und ein mit diesem zusammenwirkendes Anlageteil auf, durch welche die Steckstapel an ihrer Mantelaußenfläche nach Art einer Greifzange umfasst werden. Auch hier ergeben sich die vorstehend genannten Nachteile.

Die DE 34 24 233 C2 zeigt eine Vorrichtung zum Befüllen von Kartons, bei der Becherstangen mittels einer Greifeinrichtung in nicht näher bezeichneter Weise liegend in Kartons abgelegt werden. Somit treten auch hier zumindest die oben genannten Nachteile auf.

Die zum Prioritätsdatum der vorliegenden Patentanmeldung noch nicht veröffentlichte deutsche Patentanmeldung 103 60 160.0 beschreibt ein Verfahren zum Handhaben von im Wesentlichen stabförmigen Objekten, insbesondere Stangen aus vereinzelbar ineinander gestapelten Artikeln, wie Kunststoffbechern, bei Ladevorgängen in Verbindung mit einem Ladehilfsmittel, insbesondere einem Karton, wobei die zu handhabenden Objekte von einer Herstellungs- oder Bearbeitungsmaschine in einer ersten geometrischen Anordnung bereitgestellt werden. Hierbei wird zunächst wenigstens ein Teil der Objekte ergriffen und wird anschließend eine relative Anordnung der Objekte zueinander verändert. Sodann wird die veränderte Anordnung der Objekte in das Ladehilfsmittel abgelegt, wobei die Objekt aufrecht stehend angeordnet werden. Des weiteren offenbart die genannte Anmeldung eine Vorrichtung zum Handhaben von im Wesentlichen stabförmigen Objekten, insbesondere Stangen aus vereinzelbar ineinander gestapelten Artikeln, wie Kunststoffbechern, nach deren Bereitstellung an einer entsprechenden Herstellungs- oder Bearbeitungsmaschine in einer ersten geometrischen Anordnung bei Ladevorgängen in Verbindung mit einem Ladehilfsmittel, insbesondere einem Karton, wobei die Vorrichtung eine erste Greifeinrichtung umfasst, die zum Ergreifen zumindest eines Teils der Objekte an einer Schnittstelle mit der Herstellungs- oder Bearbeitungsmaschine und zum aufrecht stehenden Ablegen der Objekte ausgebildet ist. Zwar arbeiten das bekannte Verfahren und die bekannte Vorrichtung zufriedenstellend, doch sind gleichwohl insbesondere in vorrichtungstechnischer Hinsicht Verbesserungen wünschenswert.

Ergänzend wird noch auf das Patent US 5 273 167 hingewiesen.

Der Erfindung liegt die Aufgabe zugrunde, eine Vorrichtung der eingangs genannten Art dahingehend weiterzubilden, dass eine vollautomatische Handhabung von Becherstangen möglich wird, wobei die Becher insbesondere während der Handhabung sehr schonend behandelt werden sollen, so dass auch eine Handhabung der Bechern unmittelbar nach deren Herstellung möglich ist.

Erfindungsgemäß wird diese Aufgabe durch eine Vorrichtung nach Anspruch 1 gelöst.

Die Unteransprüche definieren bevorzugte Ausführungsformen.

Der Inhalt der vorstehend zitierten deutschen Patentanmeldung 103 60 160.0 wird vollumfänglich zum Offenbarungsgehalt der vorliegenden Anmeldung gemacht. Insbesondere sind Ausführungsformen und Inhalt der hier beschriebenen Vorrichtung mit Ausgestaltungen der in der genannten deutschen Patentanmeldung 103 60 160.0 beschriebenen Vorrichtung im Rahmen des Erfindungsgedankens vorliegender Anmeldung kombinierbar.

Mit der erfindungsgemäßen Vorrichtung können Becherstangen zuverlässig vollautomatisch in Verbindung mit einem nur einseitig geöffneten Ladehilfsmittel gehandhabt werden, wobei die Behandlung der Becher eine sehr schonende ist. Aufgrund der erfindungsgemäßen Ausrichtung der Becheranordnung ist darüber hinaus eine Optimierung der in dem Ladehilfsmittel aufnehmbaren Objekte bzw. Becherzahl möglich.

Die erfindungsgemäßen Vorrichtungen können durch ein zugeordnetes Handhabungsgerät, insbesondere einen Roboter nach ISO EN 8372, wie einen mehrachsigen Industrieroboter, betätigbar sein. Bevorzugt kann hierbei ein vier- oder sechsachsiger Industrieroboter vorgesehen sein. Indes ist selbstverständlich auch der Einsatz eines Industrieroboters mit einer anderen Anzahl an Achsen möglich.

Im Rahmen der Erfindung ist insbesondere vorgesehen, dass die Objekte mittels einer ersten Greifeinrichtung ergriffen werden und anschließend in zugeordnete Speicherelemente eines Magazinmittels abgelegt werden, wobei beim Ablegen die geometrische Anordnung der Objekte geändert wird. Dadurch ist eine erste Optimierung der Anordnung der Objekte in einem Ladehilfsmittel gegeben. Die Objekte können dann direkt in das Lademittel abgelegt werden. Um bei möglichst geringem Bauraum des Magazins eine optimale Be- und Entladung des Magazins zu gewährleisten, sind die einzelnen Reihen des Magazins zweckmäßig unabhängig voneinander in Längsrichtung verfahrbar.

Bei einer bevorzugten Ausführungsform der erfindungsgemäßen Vorrichtung ist vorgesehen, dass die Haltestäbe in jeweils einer Reihe fest auf jeweils einer von zwei Aufnahmeplatten montiert sind und dass die Aufnahmeplatten gegeneinander beweglich sind, wobei diese Bewegung zumindest eine Komponente senkrecht zu den Reihen der Haltestäbe aufweist. Da die Aufnahmeplatten gegeneinander beweglich sind, lassen sich die beiden Reihen von Haltestäben mit Hilfe eines Linearantriebs auseinander- bzw. zusammenfahren, so dass - bei entsprechender Ausbildung der Haltestäbe - die Endstücke der Haltestäbe mit Hilfe des Linearantriebs zwischen der Greif- und Freigabeposition umschalt- bzw. umstellbar sind. Aufgrund des Verzichts auf eine komplizierte Mimik zur Betätigung von Haltestäben mit Endstücken wird eine preisgünstige Herstellung und eine hohe Zuverlässigkeit sichergestellt.

In bevorzugter Ausführung der erfindungsgemäßen Vorrichtung ist vorgesehen, dass die Endstücke an ihrer Unterseite eine vom Bereich ihrer Verbindung mit den Haltestäben zu ihrem freien Ende auskragende Einführschräge aufweisen und/oder dass die Endstücke quer zu den Haltestäben ein im Wesentlichen keilförmiges Profil aufweisen.

Um eine optimale Führung der Becherstapel zu ermöglichen, sind zweite Haltestäbe vorzugsweise ohne hakenförmige Endstücke ausgebildet und weisen insbesondere ein im Wesentlichen keilförmiges Querschnittsprofil auf, wodurch ein einwandfreies Anliegen der Becherstapel an den Haltestäben gewährleistet ist. Die zweiten Haltestäbe können sich vorteilhafterweise an ihrem Ende verjüngen.

Bei einer weiteren bevorzugten Ausführungsform der erfindungsgemäßen Vorrichtung ist vorgesehen, dass die Endstücke mit den sie haltenden Haltestäben um die Erstreckungsrichtung der Haltestäbe verschwenkbar sind, wobei sich die Endstücke vorzugsweise in zwei Richtungen diametral vom Haltestab fort erstrecken und/oder mehrere Reihen von Haltestäben mit Endstücken gemeinsam bewegbar sein können. Hierdurch ist es möglich, eine Vorrichtung zu schaffen, mittels welcher eine zweidimensionale Anordnung von Becherstapeln, eine sogenannte Kavität, mit einem einzigen Arbeitsvorgang greifbar ist.

Um die Becherstapel zwischen den Haltestäben zu halten und auszurichten, ist vorzugsweise vorgesehen, dass jede benachbarten Reihen von Haltestäben mit Endstücken unabhängig voneinander bewegbar sind.

Weitere vorteilhafte Ausgestaltungen der Erfindung zeichnen sich dadurch aus, dass jeweils ein mit einem Endstück versehener und verschwenkbarer erster Haltestab von vier zweiten Haltestäben umgeben ist, wobei das Endstück insbesondere aus der durch die zweiten Haltestäbe gegebenen Kontur heraus und in diese hinein verschwenkbar ist.

Schließlich kann gemäß einer vorteilhaften Ausgestaltung vorgesehen sein, dass die zweiten Haltestäbe Zentrierspitzen zum Vorzentrieren der stabförmigen Objekte aufweisen.

Ferner kann es bei einer Vorrichtung der vorgenannten Art von Vorteil sein, wenn die Haltestäbe durch aufeinander aufgesetzte Glieder gebildet sind, die durch ein sich durch die Glieder erstreckendes Spannelement miteinander verspannt sind.

Weitere Eigenschaften und Vorteile der Erfindung ergeben sich aus der nachfolgenden Beschreibung von Ausführungsbeispielen unter Bezugnahme auf die Zeichnungen. Dabei zeigen:
- Fig. 1, 2: je eine perspektivische Ansicht einer bevorzugten Ausführungsform der erfindungsgemäßen Vorrichtung;
- Fig. 3a-3c: je eine Ansicht von Haltestäben der Vorrichtung gemäß Fig. 1 und 2;
- Fig. 4a, 4b: je eine Detailansicht der Vorrichtung gemäß Fig. 2 und 3;
- Fig. 5a-5c: je eine perspektivische Detailansicht der Vorrichtung gemäß Fig. 1 und 2;
- Fig. 6: eine perspektivische Ansicht einer Ausführungsform einer erfindungsähnlichen Vorrichtung;
- Fig. 7: eine Detailansicht eines Haltemoduls der Vorrichtung gemäß Fig. 6; und
- Fig. 8a-8d: eine schematische Darstellung der Ablage von Objekten in das Magazinmittel.

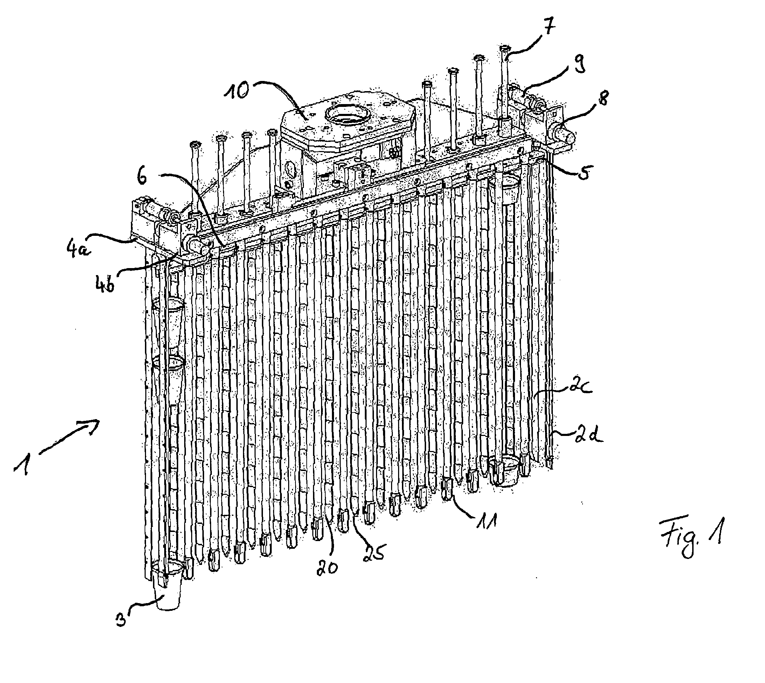

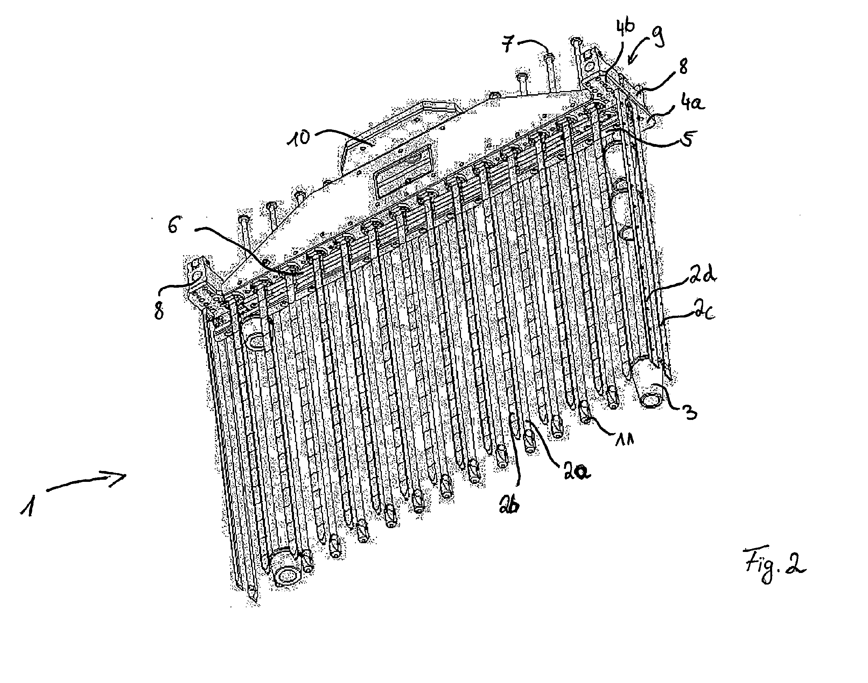

Die in Fig. 1 dargestellte erste bevorzugte Ausführungsform der erfindungsgemäßen Vorrichtung zum Handhaben und Versetzen von im Wesentlichen stabförmigen Objekten, wie einer Stange 3 von ineinander gestapelten Kunststoffbechern, ist in Form eines Reihengreifers 1 ausgebildet und weist zwei Grundplatten 4a und 4b auf, an denen jeweils eine Reihe von sich parallel erstreckenden Haltestäben 2a bis 2d zum Halten der Becherstangen 3 angeordnet sind. Zwischen den beiden Reihen der Haltestäbe 2a bis 2d befindet sich ein Ausschiebergewicht 5 (vgl. insbesondere Fig. 2), das über Verbindungsplatten 6 mit Halterungen 7 bzw. Lagerungen verbunden ist. An den Grundplatten 4a, 4b oberhalb der Haltestäbe 2a bis 2d sind Gleitlager 8 zur Führung der Grundplatten 4a, 4b bei ihrer Relativbewegung angeordnet. Zum Auseinander- und Zusammenfahren der Grundplatten 4a, 4b ist ein pneumatischer oder elektrischer Verfahrantrieb 9 vorgesehen. Die Grundplatte 4a weist zusätzlich eine Montageeinrichtung 10 zur Montage des Reihengreifers 1 an einem Handhabungsautomat, wie an einem Roboters nach ISO EN 8373, auf.

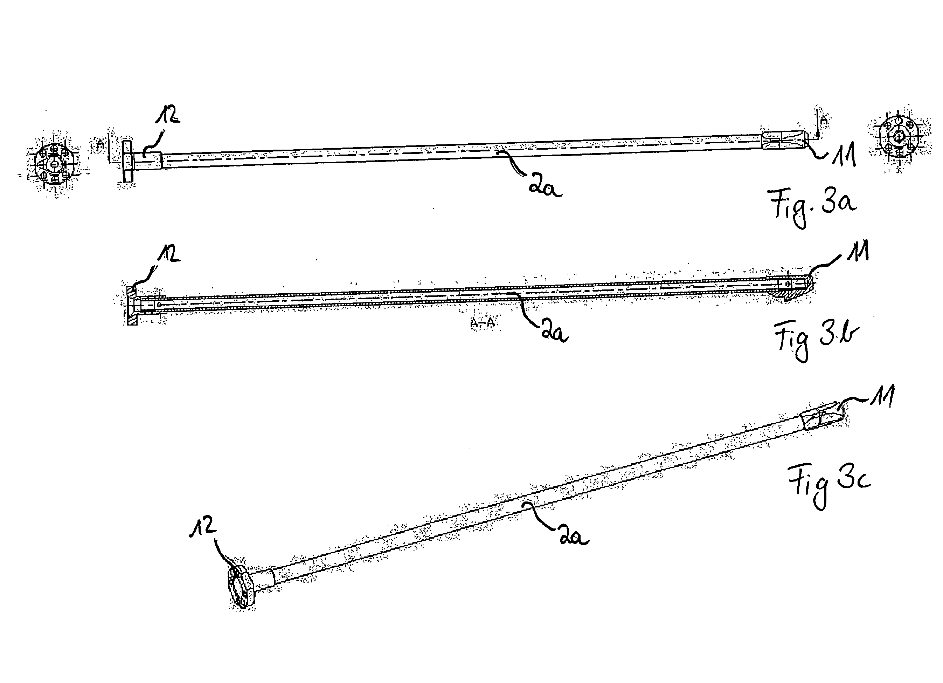

Fig. 3a bis 3c zeigen je eine Detailansicht der Haltestäbe 2a. Ein Endstück 11 am freien, unteren Ende der Haltestäbe 2a weist eine hakenförmige Auflage zum Untergreifen der Becherstapel 3 am Siegelrand des untersten Bechers auf. Das Endstück 11 besitzt an seiner Unterseite eine vom Stab 2a zum freien Ende des Hakens auskragende Schräge auf, so dass es leicht zwischen die Becherstapel hineinfindet. Am anderen Ende eines Haltestabs 2a befindet sich ein Ringflansch 12 zur Verschraubung des Haltestabs 2a mit der jeweiligen Grundplatte 4a bzw. 4b.

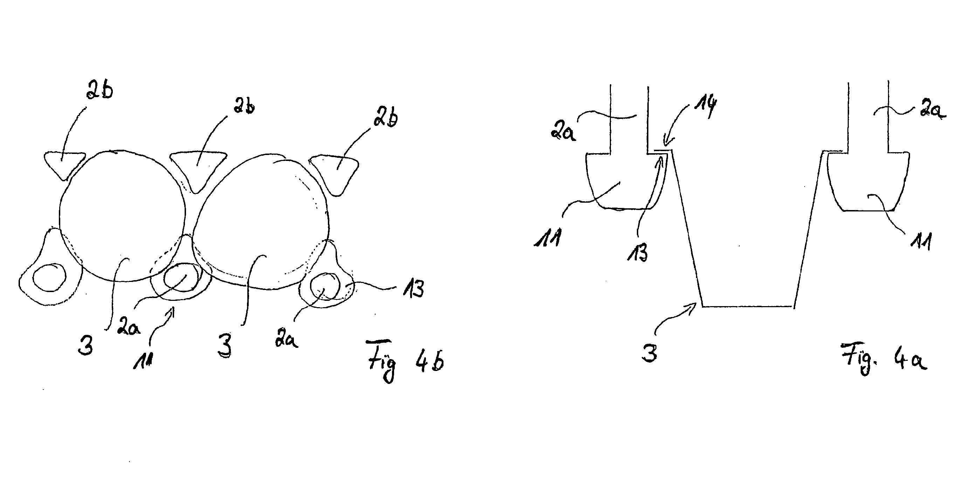

Fig. 4 zeigt in vergrößerter Darstellung die Halterung der Becherstangen 3 im Detail. Der Siegelrand 14 des untersten Bechers der Becherstange 3 liegt dabei auf der Auflage 13 des Endstücks 11 des Haltestabs 2a auf. In Fig. 4b ist ein Schnitt im Bereich der Endstücke 11 dargestellt.

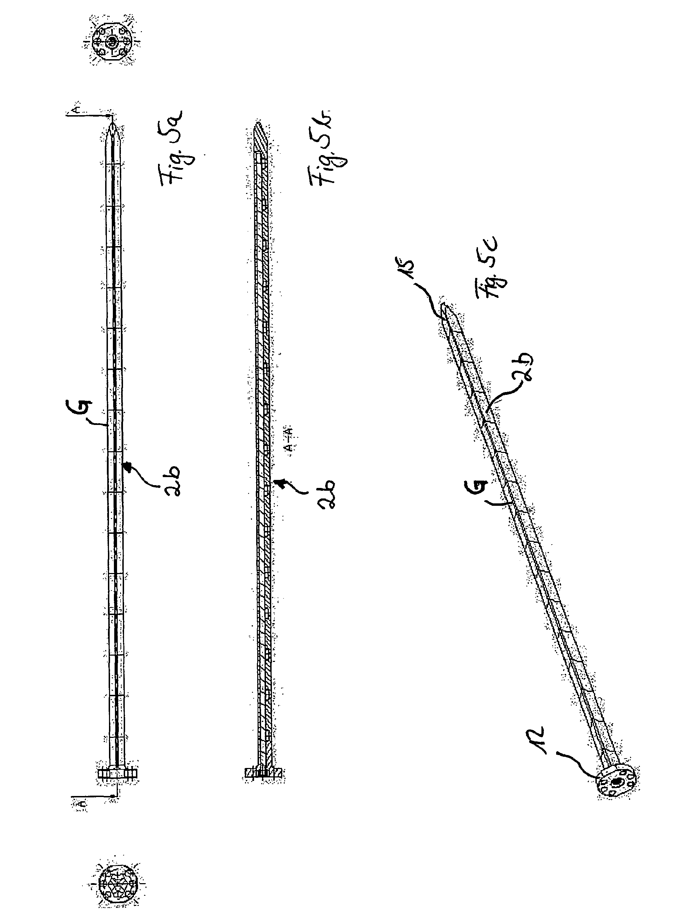

Wie aus Fig. 5 ersichtlich, haben die Haltestäbe 2b ein im Wesentlichen dreieckförmiges Profil und verjüngen sich an ihrem in Fig. 5a bis 5c rechten, unteren bzw. freien Ende 15, um ein leichteres Einführen der Becherstangen 3 zwischen die Haltestäbe zu ermöglichen. An ihrem in Fig. 5a bis 5c linken, oberen bzw. befestigungsseitigen Ende besitzen die Haltestäbe 2b wie auch die Haltestäbe 2a Ringflansche zur Montage an der Grundplatte 4b bzw. 4a.

Aus den Fig. 1, 2, 5a, 5c ist ersichtlich, dass die Haltestäbe 2a, 2b durch in Erstreckungsrichtung der Haltestäbe 2a, 2b aufeinander aufgesetzte, einzelne Glieder G gebildet sind. Die Glieder G sind durch ein sich durch sie hindurch erstreckendes Spannelement, wie vorzugsweise eine Spannstange, über an den äußeren Gliedern angeordnete Widerlager miteinander verspannt. Auf diese Weise kann eine hohe Genauigkeit hinsichtlich einer geraden Erstreckung und eine hohe Festigkeit bzw. Stabilität der Haltestäbe 2a, 2b erreicht werden, wie sie mit einstückigen Stäben des hier erforderlichen Längen-Durchmesser-Verhältnisses nicht erreichbar wäre.

Die Funktionsweise der vorstehend beschriebenen erfindungsgemäßen Vorrichtung stellt sich wie folgt dar:

Der Reihengreifer 1 wird mit Hilfe des Verfahrantriebs 9 geöffnet, d.h. die beiden Reihen von Haltestäben 2a bzw. 2b werden auseinander gefahren. Das Ausschiebergewicht 5 kann sich am unteren Ende der Haltestäbe 2a bis 2d kurz oberhalb der Endstücke 11 befinden. Der Reihengreifer 1 taucht in offenem Zustand in die Becherreihen, bestehend aus den Becherstangen 3, ein. Die Becherstangen 3 werden dabei aufgrund der verjüngten Enden der Haltestäbe 2a bis 2d zwischen dieselben eingefädelt. Dabei wird das Ausschiebergewicht 5 gegebenenfalls von den Becherstangen 3 nach oben in Richtung der Grundplatten 4a bzw. 4b geschoben und schiebt gegebenenfalls die Becher tiefer ineinander. Ist der Reihengreifer 1 vollständig in die Becherreihen eingetaucht, so wird mit Hilfe des Verfahrantriebs 9 der Greifer 1 wieder geschlossen, d.h. die Haltestäbe 2a bis 2c werden wieder aufeinander zu bewegt. Dabei tauchen die Endstücke 11 der Haltestäbe 2b zwischen die Becherstangen ein und untergreifen den Siegelrand 14 des untersten Bechers einer Becherstange 3, der auf den Auflagen 13 der Endstücke 11 der Haltestäbe 2b zum Aufliegen kommt. Da die Haltestäbe 2b ein Kippen der Becher verhindern, ist der Becherstapel 3 somit zwischen den Haltestäben 2a bis 2d arretiert, auch wenn er nur von den Endstücken 11 von zwei Haltestäben 2a untergriffen ist und den Haltestäben 2b ohne Untergriff lediglich anliegt. Der Reihengreifer 1 kann somit von einem Roboter oder dergleichen an einen vom Aufnahmeort abweichenden Bestimmungsort gebracht werden. Hier wird nun der Reihengreifer 1 - wiederum mittels des Verfahrantriebs 9 - geöffnet. Das Ausschiebergewicht 5 drückt die Becherstangen 3 aus den Haltestäben 2a bis 2d heraus nach unten und der Reihengreifer 1 ist wieder entleert, so dass er erneut befüllt werden kann.

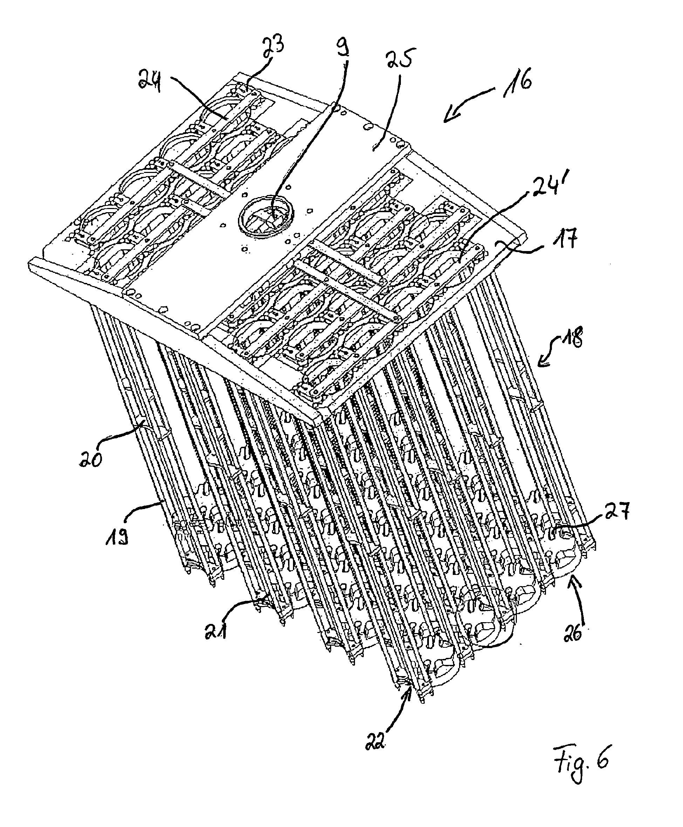

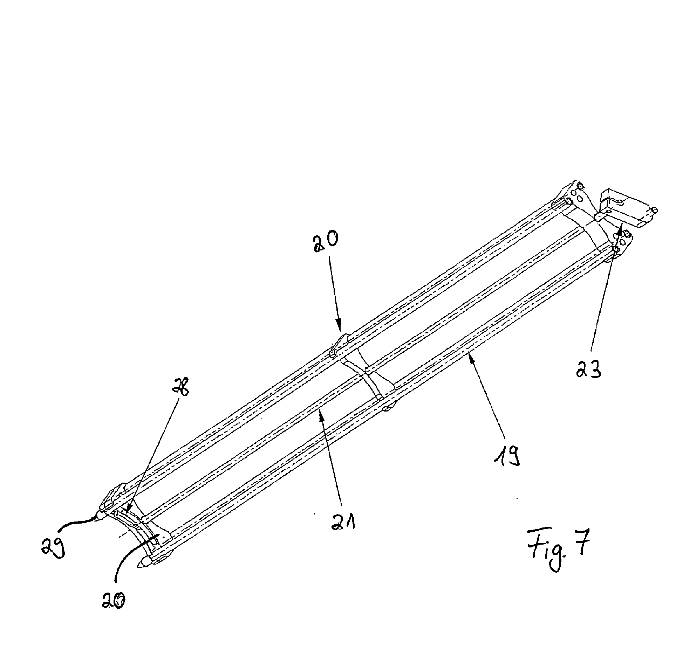

In Fig. 6 ist eine Ausführungsform, ein sogenannter Kavitätengreifer 16, einer erfindungsähnlichen Vorrichtung wiedergegeben. An einem Aufnahmerahmen 17 sind Haltermodule 18 montiert, die in Fig. 7 genauer dargestellt sind. Diese bestehen aus vier (zweiten) Haltestäben 19, die über Versteifungsstege 20 miteinander verbunden sind. Zwischen den vier Haltestäben 19 befindet sich ein weiterer (erster) Haltestab 21 mit einem Endstück 22, das sich auf der Höhe des unteren Endes der Haltestäbe 19 befindet. Das Endstück 22 erstreckt sich in zwei Richtungen senkrecht vom ersten Haltestab 21, so dass durch ihn zwei benachbarte Becherstangen 3 aufgegriffen werden können. Am oberen Ende der Haltestäbe 21 befindet sich jeweils ein Umlenkhebel 23, welche über Gestänge 24, 24' mit Verfahrantrieben 9 verbunden sind. Die Verfahrantriebe 9 sind an einer mit dem Aufnahmerahmen 17 verbundenen Montageplatte 25 befestigt, mit welcher der Kavitätengreifer 16 z.B. an einem Roboter befestigt werden kann. Benachbarte Reihen von Haltemodulen 18 sind jeweils um etwa die Hälfte des Durchmessers einer Becherstange versetzt angeordnet, um eine "dichte Packung" zu ermöglichen. Immer jede zweite Reihe von ersten Haltestäben 21 ist über das Gestänge 24 bzw. 24' mit dem Antrieb 9 verbunden und mittels diesem betätigbar. Benachbarte Reihen von ersten Haltestäben 21 sind also separat betätigbar. Zwischen den Haltemodulen 18 befinden sich Auswerfermodule 26, die über Laufrollen 27 an den zweiten Haltestäben 19 geführt sind. Die zweiten Haltestangen 19 weisen an ihren freien unteren Enden Zentrierspitzen 29 zum Vorzentrieren der Becherstangen 3 auf.

Die Funktionsweise der vorstehend beschriebenen Ausführungsform der erfindungsähnlichen Vorrichtung stellt sich wie folgt dar:

Zunächst ist der Kavitätengreifer 16 geöffnet, d.h. der Hebelarm 28 ist in die von den - zweiten - Haltestäben 19 begrenzte Kontur eingefahren; die Auswerfermodule 26 befinden sich am unteren Ende der Haltemodule 18. Nun wird der Kavitätengreifer 16 über eine geometrische Anordnung von Becherstangen 3 gestülpt, die der geometrischen Anordnung der Haltemodulen 18 entspricht. Die Becherstangen 3 werden über die Zentrierspitzen 29 vorzentriert, so dass sie ohne zu Verkanten zwischen die Haltemodule 18 gleiten, wobei sie die Auswerfermodule 26 nach oben schieben. Ist die Becherkavität vollständig übergeben worden, so werden mittels der Umlenkhebel 23 die an den - ersten - Haltestäben 21 angeordneten, doppelarmigen Endstücke 28 so ausgelenkt, dass sie die Siegelränder 14 des untersten Bechers der Becherstangen 3 untergreifen. Zum Ablegen der Becherstangen 3 werden die Endstücke 28 der Haltestäbe 21 wieder schwenkend eingefahren, so dass die Becherstangen 3 mittels der Auswerfermodule 26 bei Anheben der Vorrichtung vollständig ausgeschoben werden können. Beim vorliegenden Ausführungsbeispiel wird dabei jede zweite Zeile der Kavität einheitlich über einen Verfahrantrieb 9 geöffnet bzw. verschlossen.

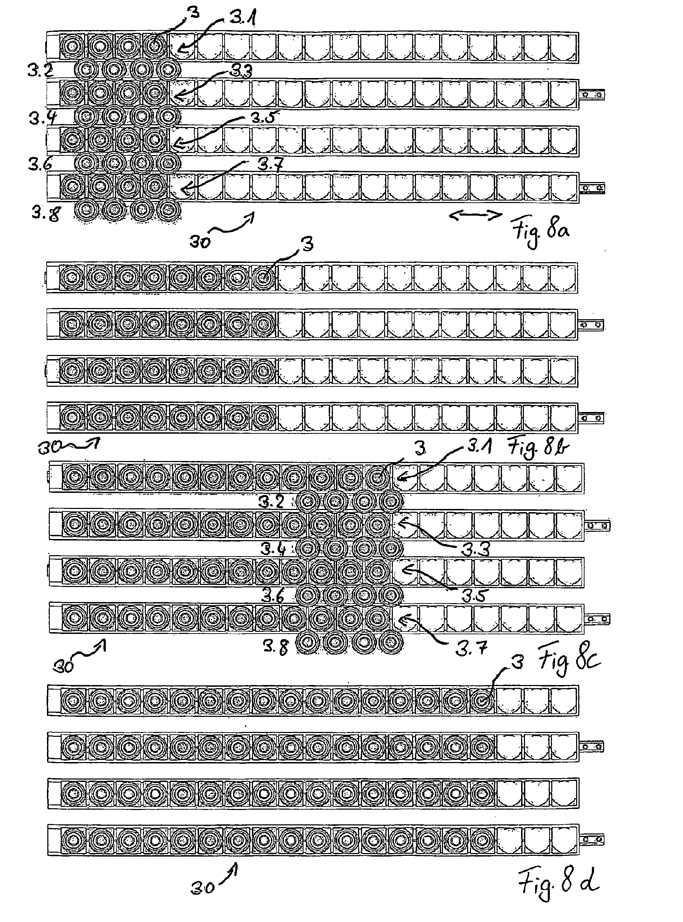

Fig. 8 zeigt das Ablegen einer Kavität von Becherstangen 3. Die einzelnen Reihen eines Magazins 30 sind unabhängig voneinander in Längsrichtung verfahrbar, um bei möglichst geringem Bauraum des Magazins 30 eine optimale Be- und Endladung desselben zu gewährleisten. Mit Hilfe eines Greifers wird eine geometrische Anordnung von Becherstangen 3, eine sogenannte Kavität, von einer Herstellungs- oder Bearbeitungsmaschine (nicht dargestellt) entnommen und wird der Greifer in das Magazin 30 eingefahren. Sodann werden die Greifvorrichtungen der Reihen 3.1, 3.3, 3.5 und 3.7 der Kavität aus Becherstangen 3 geöffnet. Die entsprechenden Reihen von Becherstangen 3 können nun aus der Greifvorrichtung ausgeworfen werden. Anschließend wird der Greifer vier Zeilen weiter verfahren und werden die Greifvorrichtungen der Reihen 3.2, 3.4, 3.6 und 3.8 geöffnet (Fig. 8b), wodurch die entsprechenden Becherstangen 3 ausgestoßen werden. Nun holt sich der Greifer eine neue Kavität von der Bearbeitungs- bzw. Herstellungsmaschine (nicht gezeigt) und verfährt in Fig. 8c und Fig. 8d ebenso wie in Fig. 8a und 8b.

### Bezugszeichenliste

- 1: Reihengreifer
- 2a-2d: Haltestab
- 3: Becherstange
- 4a, 4b: Grundplatte
- 5: Ausschiebergewicht
- 6: Verbindungsplatte
- 7: Halterung bzw. Lagerung des Ausschiebergewichts
- 8: Lager
- 9: Verfahrantrieb
- 10: Montageeinrichtung
- 11: Endstück mit Auflage
- 12: Ringflansch
- 13: Auflage
- 14: Siegelrand
- 15: verjüngtes Ende
- 16: Kavitätengreifer
- 17: Aufnahmerahmen
- 18: Haltemodul
- 19: Haltestab
- 20: Versteifungssteg
- 21: Haltestab
- 22: Endstück
- 23: Umlenkhebel
- 24: Gestänge
- 25: Montageplatte
- 26: Auswerfermodul
- 27: Laufrolle
- 28: Endstück
- 29: Zentrierspitze
- 30: Magazin

## Patentansprüche

1. Vorrichtung zum Handhaben von im Wesentlichen stabförmigen Objekten, insbesondere Stangen (3) aus vereinzelbar ineinander gestapelten Artikeln, wie Kunststoffbechern, mit mehreren ersten Haltestäben (2a, 21) mit hakenförmigen Endstücken zum Untergreifen wenigstens einer Reihe der stabförmigen Objekte (3), , wobei die Haltestäbe jeweils einer von zwei Reihen zugehören und wobei diese Reihen mittels eines Verfahrantriebs (9) auseinander- und zusammenfahrbar sind, so dass die Endstücke (11, 28) durch eine Bewegung in einer Ebene senkrecht zu der Erstreckungsrichtung der ersten Haltestäbe (2a, 21) unter die Objekte (3) und zur Freigabe derselben bewegbar sind.

2. Vorrichtung nach Anspruch 1, **dadurch gekennzeichnet, dass** die Haltestäbe (2a, 2b, 2c, 2d) in jeweils einer Reihe fest auf jeweils einer von zwei Aufnahmeplatten (4a, 4b) montiert sind und dass die Aufnahmeplatten (4a, 4b) gegeneinander beweglich sind, wobei diese Bewegung zumindest eine Komponente senkrecht zu den Reihen der Haltestäbe (2a, 2b, 2c, 2d) aufweist.

3. Vorrichtung nach Anspruch 1 oder 2, **dadurch gekennzeichnet, dass** die Endstücke (11) an ihrer Unterseite eine vom Bereich ihrer Verbindung mit den Haltestäben (2a) zu ihrem freien Ende auskragende Einführschräge aufweisen.

4. Vorrichtung nach einem der vorangehenden Ansprüche, **dadurch gekennzeichnet, dass** die Endstücke (11) quer zu den Haltestäben (2a) ein im Wesentlichen keilförmiges Profil aufweisen.

5. Vorrichtung nach einem der vorangehenden Ansprüche, **dadurch gekennzeichnet, dass** zweite Haltestäbe (2b) keine hakenförmigen Endstücke aufweisen.

6. Vorrichtung nach einem der vorangehenden Ansprüche, **dadurch gekennzeichnet, dass** die Haltestäbe (2b) ein im Wesentlichen keilförmiges Querschnittsprofil aufweisen.

7. Vorrichtung nach einem der vorangehenden Ansprüche, **dadurch gekennzeichnet, dass** die Haltestäbe (2b) sich an ihrem Ende verjüngen.

8. Vorrichtung nach Anspruch 1, **dadurch gekennzeichnet, dass** die Endstücke (28) mit den sie haltenden Haltestäben (21) um die Erstreckungsrichtung der Haltestäbe (21) verschwenkbar sind.

9. Vorrichtung nach einem der vorangehenden Ansprüche, **dadurch gekennzeichnet, dass** die Endstücke (28) sich in zwei Richtungen diametral vom Haltestab (21) fort erstrecken.

10. Vorrichtung nach einem der Ansprüche 1, 3 bis 9, **dadurch gekennzeichnet, dass** mehrere Reihen von Haltestäben (21) mit Endstücken (28) gemeinsam bewegbar sind.

11. Vorrichtung nach einem der Ansprüche 1, 3 bis 10, **dadurch gekennzeichnet, dass** jede benachbarten Reihen von Haltestäben (21) mit Endstücken (28) unabhängig voneinander bewegbar sind.

12. Vorrichtung nach einem der Ansprüche 1, 3 bis 11, **dadurch gekennzeichnet, dass** jeweils ein mit einem Endstück (28) versehener und verschwenkbarer erster Haltestab (21) von vier zweiten Haltestäben (19) umgeben ist.

13. Vorrichtung nach Anspruch 12, **dadurch gekennzeichnet, dass** das Endstück (28) aus der durch die zweiten Haltestäbe (19) gegebenen Kontur heraus und in diese hinein schwenkbar ist.

14. Vorrichtung nach einem der vorangehenden Ansprüche, **dadurch gekennzeichnet, dass** die zweiten Haltestäbe (19) Zentrierspitzen (29) zum Vorzentrieren der stabförmigen Objekte (3) aufweisen.

## Claims

1. Device for handling essentially rod-shaped objects, especially bars (3) of articles, which are stacked in one another in such a way that they can be separated, such as plastic cups, with a plurality of first holding rods (2a, 21) with hook-like end pieces (11, 28) for extending under at least one row of the said rod-shaped objects (3), wherein the holding rods belong to one of two rows, respectively, and wherein said rows are movable apart and towards each other by means of a displacing drive (9) in such a way that the said end pieces (11, 28) can be moved under the said objects (3) for releasing same by a motion into a plane extending at right angles to the direction of extension of the said first holding rods (2a, 21).

2. Device in accordance with claim 1, **characterized in that** the said holding rods (2a, 2b, 2c, 2d) are mounted rigidly on one of two said mounting plates (4a, 4b) and that the said mounting plates (4a, 4b) are mobile in relation to one another, this motion having at least one component at right angles to the rows of the said holding rods (2a, 2b, 2c, 2d).

3. Device in accordance with claim 1 or 2, **characterized in that** the said end pieces (11) have, on their underside, a lead-in bevel projecting toward their free end from the area in which they are connected to the said holding rods (2a).

4. Device in accordance with one of the above claims, **characterized in that** the said end pieces (11) have an essentially wedge-shaped profile at right angles to the said holding rods (2a).

5. Device in accordance with one of the above claims, **characterized in that** said second holding rods (2b) have no said hook-like end pieces.

6. Device in accordance with one of the above claims, **characterized in that** the said holding rods (2b) have an essentially wedge-shaped cross-sectional profile.

7. Device in accordance with one of the above claims, **characterized in that** the said holding rods (2b) taper at their end.

8. Device in accordance with claim 1, **characterized in that** the said end pieces (28) can be pivoted with the said holding rods (21) holding same about the direction of extension of the said holding rods (21).

9. Device in accordance with one of the above claims, **characterized in that** the said end pieces (28) extend diametrically away from the said holding rod (21) in two directions.

10. Device in accordance with one of the claims 1, 3 through 9, **characterized in that** a plurality of rows of said holding rods (21) with said end pieces (28) can be moved together.

11. Device in accordance with one of the claims 1, 3 through 10, **characterized in that** each adjacent row of said holding rods (21) with said end pieces (28) can be moved independently from one another.

12. Device in accordance with one off the claims 1, 3 through 11, **characterized in that** one said pivotabble first holding rod (21) each, provided with a said end piece (28), is surrounded by four said second holding rods (19).

13. Device in accordance with claim 12, **characterized in that** the said end piece (28) can be pivoted out of the contour defined by the said second holding rods (19) and into same.

14. Device in accordance with one of the above claims, **characterized in that** the said second holding rods (19) have said centering tips (29) for precentering the said rod-shaped objects (3).

## Revendications

1. Dispositif permettant de manipuler des objets pour l'essentiel en forme de barre, notamment des tiges (3) d'articles empilés et imbriqués de façon individuelle, comme des cuvettes en plastique, avec plusieurs premières barres de maintien (2a, 21) avec des pièces d'extrémité en forme de crochet pour saisir par le bas au moins une rangée d'objets (3) en forme de barre, les barres de maintien appartenant respectivement à une des deux rangées et ces rangées pouvant être rassemblées et détachées à l'aide d'un entraînement mobile (9), de sorte que les pièces d'extrémité (11, 28) peuvent être déplacées par un déplacement dans un plan perpendiculaire à la direction d'extension des premières barres de maintien (2a, 21) sous les objets (3), en vue de les libérer.

2. Dispositif selon la revendication 1, **caractérisé en ce que** les barres de maintien (2a, 2b, 2c, 2d) sont respectivement montées dans une rangée fixement sur une plaque réceptrice respectivement parmi deux plaques réceptrices (4a, 4b) et **en ce que** les plaques réceptrices (4a, 4b) sont mobiles en sens opposé, ce déplacement comportant au moins une composante perpendiculaire aux rangées des barres de maintien (2a, 2b, 2c, 2d).

3. Dispositif selon la revendication 1 ou 2, **caractérisé en ce que** les pièces d'extrémité (11) présentent un chanfrein d'introduction saillant au niveau de leur côté inférieur depuis la zone de leur jonction d'avec les barres de maintien (2a) jusqu'à leur extrémité libre.

4. Dispositif selon l'une quelconque des revendications précédentes, **caractérisé en ce que** les pièces d'extrémité (11) présentent un profil pour l'essentiel en forme de clavette transversalement par rapport aux barres de maintien (2a).

5. Dispositif selon l'une quelconque des revendications précédentes, **caractérisé en ce que** les deuxièmes barres de maintien (2b) ne présentent pas de pièces d'extrémité en forme de crochet.

6. Dispositif selon l'une quelconque des revendications précédentes, **caractérisé en ce que** les barres de maintien (2b) présentent un profil en coupe transversale pour l'essentiel en forme de clavette.

7. Dispositif selon l'une quelconque des revendications précédentes, **caractérisé en ce que** les barres de maintien (2b) se rétrécissent au niveau de leur extrémité.

8. Dispositif selon la revendication 1, **caractérisé en ce que** les pièces d'extrémité (28) peuvent pivoter autour de la direction d'extension des barres de maintien (21) avec les barres de maintien (21) les maintenant.

9. Dispositif selon l'une quelconque des revendications précédentes, **caractérisé en ce que** les pièces d'extrémité (28) s'étendent dans deux directions par rapport au diamètre de la barre de maintien (21).

10. Dispositif selon l'une quelconque des revendications 1 et 3 à 9, **caractérisé en ce que** plusieurs rangées de barres de maintien (21) peuvent être déplacées conjointement avec les pièces d'extrémité (28).

11. Dispositif selon l'une quelconque des revendications 1 et 3 à 10, **caractérisé en ce que** chaque rangée voisine de barres de maintien (21) peut être déplacée indépendamment de l'autre avec les pièces d'extrémité (28).

12. Dispositif selon l'une quelconque des revendications 1 et 3 à 11, **caractérisé en ce que** respectivement une première barre de maintien (21) pouvant pivoter et pourvue d'une pièce d'extrémité (28) est entourée de quatre deuxièmes barres de maintien (19).

13. Dispositif selon la revendication 12, **caractérisé en ce que** la pièce d'extrémité (28) peut pivoter hors du contour fourni par les deuxièmes barres de maintien (19) et rerentrer dans celui-ci.

14. Dispositif selon l'une quelconque des revendications précédentes, **caractérisé en ce que** les deuxièmes barres de maintien (19) comportent des points de centrage (29) pour pré-centrer les objets (3) en forme de barre.
